# EUROPEAN PATENT APPLICATION

(11) **EP 4 582 572 A1**
(43) Date of publication of application: **09.07.2025**
(21) Application number: 23860013.4
(22) Date of filing: 10.08.2023
(51) Int. Cl.: C22B 7/00, C22B 1/02, C22B 5/10, H01M 10/54

(54) **METHOD FOR RECOVERING VALUABLE METALS**

(30) Priority: 01.09.2022 JP 2022139330
(71) Applicant: SUMITOMO METAL MINING CO., LTD., Tokyo 105-8716 (JP)
(72) Inventor: NAGAKURA Toshihiko, Niihama-shi, Ehime 792-0002 (JP); YABE Takayuki, Niihama-shi, Ehime 792-0002 (JP)
(74) Representative: Jones, Nicholas Andrew
(86) International application number: PCT/JP2023/029292
(87) International publication number: WO 2024/048248

(57) **Abstract**

Provided is a method for cost-effectively recovering valuable metals from waste lithium-ion batteries through a pyrometallurgical process.

The present invention pertains to a method for recovering valuable metals from waste lithium-ion batteries, the method comprising: an oxidation roasting step S3 in which raw materials including waste lithium-ion batteries are subjected to an oxidation roasting treatment; and a reduction step S4 in which the obtained oxidation roasted product is reduced in the presence of carbon. In the oxidation roasting step S3, calcium carbonate is charged into a furnace together with the raw materials including waste lithium-ion batteries to control the treatment temperature of the oxidation roasting treatment.

## Description

### TECHNICAL FIELD

The present invention relates to a method for recovering valuable metals contained in waste lithium-ion batteries.

### BACKGROUND ART

In recent years, lithium-ion batteries have been widely used as a lightweight and high-power secondary battery. As lithium-ion batteries, those have been known, which enclose a negative electrode material having a negative electrode active material such as graphite fixed on a negative electrode current collector made of copper foil, a positive electrode material having a positive electrode active material such as lithium nickel oxide or lithium cobalt oxide fixed on a positive electrode current collector made of aluminum foil, a separator made of e.g. a porous polypropylene resin film, an electrolyte solution including an electrolyte such as lithium hexafluorophosphate (LiPF₆) and the like in an outer case made of metal such as aluminum or iron.

One of the major applications of lithium-ion batteries is hybrid electric vehicles and electric vehicles, and a large number of on-board lithium-ion batteries are expected to be discarded in the future with the life cycle of the vehicles. Many proposals have been made about reusing such used batteries and defective products formed during the production (hereinafter, referred to as "waste lithium-ion battery") as a resource, and a pyrometallurgical process including fusing the whole amount of waste batteries in a high temperature furnace has been proposed as a method for reusing waste lithium-ion batteries (see **e.g.** Patent Document 1).

In the method disclosed in Patent Document 1, at least a part of a heating agent and/or a reductant is replaced by waste lithium-ion batteries including any one or more of metal iron, metal aluminum or carbon and the resulting heating agent and/or reductant is added in a reduction step after a charge (copper concentrate) and a slag forming agent are put into a copper smelting furnace and roasted.

Incidentally, lithium hexafluorophosphate has been used as an electrolyte for commercially available lithium-ion batteries as described above. Lithium hexafluorophosphate has been widely used because of having high solubility in carbonates, which are frequently used as an electrolyte solution, and a high lithium ion dissociation degree, and being inexpensive. Phosphorus (P) is contained in a proportion of about 0.2 mass% or more in waste lithium-ion batteries obtained by roasting common cylindrical lithium-ion batteries, so-called 18650 batteries, and in a proportion of about 0.1 mass% or more in waste lithium-ion batteries obtained by roasting on-board square batteries. When iron outer cases in 18650 batteries and aluminum outer cases in square batteries have been removed, the amount of phosphorus contained in battery contents is further increased.

When waste lithium-ion batteries containing phosphorus are put into a high temperature environment in which alloy always exists like a copper refining furnace, phosphorus is distributed to the alloy and almost all amount of phosphorus is finally mixed in crude copper as impurities. In an electrolytic treatment of crude copper by a hydrometallurgical process, about 70% of phosphorus is distributed to an electrolyte solution, and thus there is a problem in that the concentration of phosphorus is increased in the electrolyte solution with electrolysis proceeding. In order to lower the concentration of phosphorus in an electrolyte solution, it is required to newly provide a purification step of removing phosphorus for the hydrometallurgical process. In the hydrometallurgical process, however, it is not sufficient to collect only copper, and it is not easy in technical and cost terms to add a step without affecting the recovery ratio of other elements to be recovered. Therefore, it has been demanded to effectively remove phosphorus in a pyrometallurgical process, a previous step of the hydrometallurgical process.

According to a method disclosed in Patent Document 2, for example, an alloy obtained by melting waste lithium-ion battery contents after oxidative roasting and reduction is partially sulfurized to distribute phosphorus to residual alloy even when using contents containing a high concentration of phosphorus, and thus valuable metals such as copper, nickel and cobalt can be recovered as sulfides containing a low amount of phosphorus. However, when the oxidative roasting treatment is carried out around the lower limit of the temperature range provided in this method, oxidative removal of carbon (C) is insufficient in the oxidative roasting treatment due to the grade of waste lithium-ion batteries to be treated. Consequently, the separation of metal and slag is hindered in a reduction melting treatment and the recovery ratio of valuable metals can be lowered. Furthermore, impurities such as iron and phosphorus are also reduced, and thus costs to remove the impurities in subsequent steps can be increased.

In order to avoid the occurrence of such problems, the oxidative roasting treatment around the upper limit of the temperature range provided in the method described in Patent Document 2 is effective; however, thermal energy costs are increased and temperature control can be also difficult. Consequently, in some cases, an efficient roasting treatment cannot be carried out because oxidatively roasted material is sintered.

Such tendency is particularly remarkable when the amount of carbon contained in waste lithium-ion batteries is excessive. It is believed that this is because heat generation becomes excessive due to carbon excessively contained, and thus adjustment cannot be made by fuel. In order to avoid a state in which heat generation becomes excessive, there is, for example, a method in which the amount of waste lithium-ion batteries treated is lowered. However, production efficiency becomes worse in this method and thus it has been difficult to adopt the method.

As described above, it has been difficult to obtain satisfactory results with regard to both the grade of oxidatively roasted material and the treatment efficiency of the oxidative roasting treatment in conventional techniques.

### Citation List

### Patent Document

Patent Document 1: Japanese Patent No. 5818798
Patent Document 2: Japanese Unexamined Patent Application, Publication No. 2018-197385

### DISCLOSURE OF THE INVENTION

### Problems to be Solved by the Invention

The present invention has been made in view of such circumstances, and an object thereof is to provide a method for recovering valuable metals from waste lithium-ion batteries inexpensively by a pyrometallurgical process.

### Means for Solving the Problems

The present inventors repeated diligent investigations to solve the above-described problems. Consequently, it was found that in an oxidative roasting treatment on a raw material containing waste lithium-ion batteries, the treatment temperature of the oxidative roasting treatment (oxidative roasting temperature) could be controlled and carbon could be efficiently removed by charging calcium carbonate into a furnace together with the raw material containing the waste lithium-ion batteries and carrying out the treatment, thereby completing the present invention.

(1) The first invention of the present invention is a method for recovering valuable metals from waste lithium-ion batteries, the method comprising an oxidative roasting step of carrying out an oxidative roasting treatment on a raw material containing the waste lithium-ion batteries, and a reduction step of reducing oxidatively roasted material obtained in the presence of carbon, wherein the treatment temperature of the oxidative roasting treatment is controlled by charging calcium carbonate into a furnace together with the raw material containing the waste lithium-ion batteries in the oxidative roasting step.
(2) The second invention of the present invention is the method for recovering valuable metals in the first invention, wherein the amount of the calcium carbonate charged in terms of the amount of calcium oxide with respect to the amount of aluminum contained in the raw material, in terms of the amount of aluminum oxide, is adjusted so that the mass ratio expressed by calcium oxide (CaO)/aluminum oxide (Al₂O₃) and is 1.0 or more and 2.0 or less in the oxidative roasting step.
(3) The third invention of the present invention is the method for recovering valuable metals in the first or second invention, wherein the carbon grade of the oxidatively roasted material obtained is less than 1.0 mass% by introducing an oxidant in an amount of 1.5 times or more the chemical equivalent of carbon in the raw material to be treated, and carrying out the oxidative roasting treatment at a treatment temperature selected in a range of 600°C or higher and 900°C or lower in the oxidative roasting step.

### Effects of the Invention

According to the present invention, it is possible to provide a method for recovering valuable metals from waste lithium-ion batteries inexpensively by a pyrometallurgical process.

### BRIEF DESCRIPTION OF THE DRAWINGS

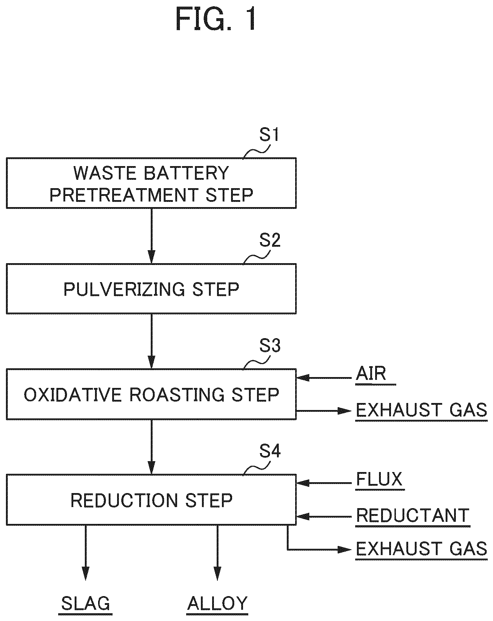

Fig. 1 is a process chart showing an example of the flow of a method for recovering valuable metals.

### PREFERRED MODE FOR CARRYING OUT THE INVENTION

A specific embodiment of the present invention (hereinafter referred to as "present embodiment") will now be described in detail. It should be noted that the present invention is not limited to the embodiment below and various modifications can be made without changing the gist of the present invention.

### <<1. Summary of method for recovering valuable metals>>

The method for recovering valuable metals according to the present embodiment is a method for recovering valuable metals contained in waste lithium-ion batteries containing phosphorus (P). In order to recover valuable metals from waste lithium-ion batteries, a pyrometallurgical process and a hydrometallurgical process are carried out. The method for recovering valuable metals according to the present embodiment relates to mainly the pyrometallurgical process.

The waste lithium-ion batteries (hereinafter also referred to as "waste battery") encompass used lithium-ion batteries, defective products formed in the production process of e.g. a positive electrode material forming secondary batteries, residues inside the production process, and waste material in the production process of lithium-ion batteries such as leavings. Valuable metals such as copper (Cu), nickel (Ni) and cobalt (Co) are contained in waste lithium-ion batteries.

Fig. 1 is a process chart showing an example of the flow of a method for recovering valuable metals. As shown in Fig. 1, the method for recovering valuable metals according to the present embodiment comprises a waste battery pretreatment step S1 of removing electrolyte solutions and outer cases in waste lithium-ion batteries, a pulverizing step S2 of obtaining pulverized material by pulverizing battery contents, an oxidative roasting step S3 of carrying out oxidative roasting of the pulverized material, and a reduction step S4 of reducing the oxidatively roasted material to alloy valuable metals.

In particular, the method according to the present embodiment is characterized in that calcium carbonate is charged into a furnace together with the raw material containing waste lithium-ion batteries to control the treatment temperature of the oxidative roasting treatment in the oxidative roasting step S3.

According to such method, carbon contained in waste lithium-ion batteries can be efficiently and effectively oxidized and removed, and consequently phosphorus as impurities, can be removed, and thus valuable metals can be inexpensively and effectively recovered.

In addition, phosphorus can be effectively removed, and thus a hydrometallurgical process after a pyrometallurgical process in the recovery of valuable metals can be simplified. Specifically, the amount treated in the hydrometallurgical process can be decreased to about 1/4 to 1/3 the amount of waste lithium-ion batteries put into the pyrometallurgical process in a mass ratio, and the hydrometallurgical process can be simplified. Therefore, when the pyrometallurgical process (waste battery pretreatment step S1 to reduction step S4) is considered as a pretreatment in a broad sense, alloy having a small amount of impurities (phosphorus) is obtained, and also the amount of treatment is largely decreased, and thus the pyrometallurgical process and the hydrometallurgical process can be industrially combined.

It should be noted that the hydrometallurgical process is carried out on alloy containing valuable metals obtained after the pyrometallurgical process to remove impurity components, and valuable metals such as copper, nickel and cobalt can be separated and purified to recover each metal. As a treatment in the hydrometallurgical process, known methods such as a neutralization treatment or a solvent extraction treatment can be carried out. As an example, in the case of alloy including copper, nickel and cobalt, valuable metals are leached with an acid such as sulfuric acid (leaching step), and then copper, for example, is extracted by e.g. solvent extraction (extraction step). A solution containing residual nickel and cobalt is used for a step of producing a positive electrode active material in a battery production process.

### <<2. Each step of recovery method>>

Each step in the method for recovering valuable metals according to the present embodiment will now be described in detail.

### [Waste battery pretreatment step]

The waste battery pretreatment step S1 is carried out for the purpose of, for example, preventing waste lithium-ion battery explosion or detoxifying the batteries, and removing outer cases. That is, waste lithium-ion batteries are in the form of a closed system, and have e.g. an electrolyte solution in the interior thereof. Therefore, when the batteries are directly pulverized, there is a risk of explosion, which is dangerous. Because of this, it is required to carry out an electric discharge treatment and a treatment for removing an electrolyte solution by any method. The outer cases frequently include a metal such as aluminum (Al) or iron (Fe), and such metal outer cases can be directly recovered as valuable metals in a relatively easy way. As described above, safety is increased and also the recovery and productivity of valuable metals such as copper, nickel and cobalt can be raised by removing electrolyte solutions and outer cases in the waste battery pretreatment step S1.

A specific treating method in the waste battery pretreatment step S1 is not particularly limited, and, for example, a hole can be physically made on waste batteries with a needle-shaped edge to flow out and remove electrolyte solutions in the interior thereof. Waste batteries can be also detoxified by directly heating the batteries to burn the electrolyte solutions.

When aluminum and iron contained in outer cases, which form waste batteries, are recovered, the outer cases can be pulverized and then screened using a sieve shaker. Aluminum is easily formed into powder even by gentle pulverizing and can be efficiently recovered. Iron contained in the outer cases can be recovered by magnetic screening.

### [Pulverizing step]

In the pulverizing step S2, the waste battery contents are pulverized to obtain pulverized material. The treatment in the pulverizing step S2 is carried out for the purpose of increasing reaction efficiency in the pyrometallurgical process. The recovery ratio of valuable metals, such as copper, nickel and cobalt, can be increased by increasing the reaction efficiency.

A specific pulverizing method in the treatment in the pulverizing step S2 is not particularly limited, and a conventionally known grinder such as a cutter mixer can be used for the pulverizing.

### [Oxidative roasting step]

In the oxidative roasting step S3, the pulverized material is subjected to oxidative roasting to obtain oxidatively roasted material. In the oxidative roasting step S3, the treatment is carried out at an oxidation degree in which carbon (C) contained in waste battery contents can be oxidized and removed and also at least aluminum contained in the pulverized material can be oxidized. It should be noted that in general, main elements forming waste lithium-ion batteries are easily oxidized in the order of aluminum (Al) > lithium (Li) > carbon (C) > manganese (Mn) > phosphorus (P) > iron (Fe) > cobalt (Co) > nickel (Ni) > copper (Cu) due to differences in affinities for oxygen.

As described above, carbon contained in waste battery contents can be removed by oxidative roasting of the pulverized material in the oxidative roasting step S3. Consequently, molten fine particles of reduced valuable metals locally occurring in the subsequent reduction step S4 can cohere without physical obstacles by carbon, and can be recovered as integrated alloy. In the reduction step S4, phosphorus contained in waste battery contents is prevented from being reduced by carbon, and phosphorus can be effectively oxidized and removed, and thus prevented from being distributed to alloy of valuable metals.

That is, the amount of carbon contained in the oxidatively roasted material obtained is less than 1.0 mass% in the oxidative roasting step S3. As described above, by removing carbon so that the amount of carbon contained is almost 0 mass%, phosphorus can be effectively oxidized and removed, and also it is easy to adjust the amount of carbon to efficiently reduce and alloy valuable metals in the subsequent reduction step S4.

Assuming that the oxidative roasting treatment is not carried out, that is, when the pulverized material of waste battery contents is directly put into a furnace and subjected to a reduction melting treatment, carbon contained in waste batteries hinders the separation of metal and slag generated by the reduction melting treatment, and consequently the recovery ratio of valuable metals is lowered (or slag cannot be sufficiently removed). Even if oxidation is also carried out in the reduction melting treatment, it is difficult to more strictly adjust the oxidation degree, and the recovery ratio of valuable metals is lowered also in this respect. In addition, when carbon is insufficiently removed in the oxidative roasting treatment and carbon remains in an amount of not less than the chemical equivalent of nickel, cobalt and copper, impurities such as iron and phosphorus contained in the pulverized material are also reduced, and costs to remove impurities in the hydrometallurgical process will be increased.

In the method according to the present embodiment, when waste lithium-ion batteries are subjected to the oxidative roasting treatment, calcium carbonate is charged into a roasting furnace together with the raw material containing the waste lithium-ion batteries. As described above, the treatment temperature of the oxidative roasting treatment can be effectively controlled by charging calcium carbonate and carrying out the oxidative roasting treatment.

It is effective to charge calcium carbonate and carry out the oxidative roasting treatment particularly when the carbon grade in waste lithium-ion batteries to be treated is significantly high (e.g. when the carbon grade is 30 mass% or more). That is, when the carbon grade in waste lithium-ion batteries is significantly high, the burning reaction of carbon is more active than usual and thus heat generation easily becomes excessive. Because of this, even when adjustment is made to decrease the supply amount of fuel which is burned in the roasting furnace, the treatment temperature of the oxidative roasting treatment (oxidative roasting temperature) can be higher than 900°C. At this time, the oxidative roasting temperature can be effectively prevented from increasing due to the activated burning reaction by charging calcium carbonate together with waste lithium-ion batteries into the roasting furnace and carrying out the treatment because the thermal decomposition reaction of the calcium carbonate is an endothermic reaction. Furthermore, the thermal decomposition temperature of calcium carbonate is around 800°C, and thus the endothermic reaction does not occur in a temperature range of not higher than the thermal decomposition temperature. Therefore, the oxidative roasting treatment carried out in the temperature range is not blocked. That is, calcium carbonate charged functions only as a brake not to allow the treatment temperature of the oxidative roasting treatment to be higher than 900°C.

In the present embodiment, as described above, even when there is concern that the burning reaction of carbon becomes more active than usual, it is not required to adjust the amount of waste lithium-ion batteries treated to a lower amount, and an efficient oxidative roasting treatment can be carried out.

It should be noted that calcium carbonate is changed to calcium oxide by thermal decomposition and thus the generated calcium oxide can be allowed to effectively function as a flux for a reaction in a reduction step S4 described below.

The amount of calcium carbonate charged is not particularly limited, and the charged amount of calcium carbonate with respect to the amount of aluminum contained in the raw material is preferably adjusted so that the mass ratio expressed by calcium oxide (CaO)/aluminum oxide (Al₂O₃) is 1.0 or more and 2.0 or less in terms of calcium oxide and aluminum oxide, respectively. The treatment temperature of the oxidative roasting treatment can be efficiently prevented from increasing by charging calcium carbonate in such amount and carrying out the treatment even when the carbon grade in waste lithium-ion batteries to be treated is high (e.g. when the carbon grade is 30 mass% or more).

The optimum value of the amount of calcium carbonate charged (the ratio of calcium oxide (CaO)/aluminum oxide (Al₂O₃)) can be specifically obtained, for example, by carrying out a preliminary test to obtain a relationship among the carbon grade in waste lithium-ion batteries and the amount of calcium carbonate charged, and the treatment temperature of the oxidative roasting treatment as described in Examples below.

In the oxidative roasting treatment, an oxidant is preferably introduced in an amount of 1.5 times or more the chemical equivalent of carbon (the amount required to oxidize carbon) in the raw material containing waste lithium-ion batteries. In addition, the amount of oxidant introduced is more preferably 2.0 times or more and 3.0 times or less the chemical equivalent of carbon in the raw material. The oxidant is not particularly limited, and air is preferably used from the viewpoint of easy handling and for the purpose of cooling surplus oxidation heat.

As described above, by introducing an oxidant in the above-described conditions, the oxidative roasting treatment can be completed in a shorter time and moreover carbon to be oxidized contained in waste lithium-ion batteries can be easily oxidized and removed.

Furthermore, it is preferred to introduce an oxidant in the above-described conditions and also carry out the oxidative roasting treatment at a treatment temperature of 600°C or higher and 900°C or lower in the oxidative roasting treatment. Because of this, the oxidative roasting treatment can be efficiently and effectively completed in a shorter time than in conventional treatments, and moreover carbon in the raw material can be easily oxidized and removed without setting the treatment temperature to a high temperature unlike conventional treatments.

That is, carbon contained in waste lithium-ion batteries can be effectively oxidized and removed in the treatment in a shorter time than in conventional treatments by introducing an oxidant in the above-described conditions and setting the temperature conditions of the oxidative roasting treatment to 600°C or higher. Furthermore, when the temperature conditions of oxidative roasting temperature are set to 900°C or lower, thermal energy costs can be kept low, and also the temperature can be easily controlled. As described above, when the oxidative roasting treatment is carried out at a treatment temperature of 600°C or higher and 900°C or lower, the efficiency of the oxidative roasting treatment can be increased compared to that in conventional treatments.

Furthermore, in a case where the oxidative roasting treatment is carried out using e.g. a known rotary kiln, accretions on the inner wall of the kiln can be prevented and the oxidative roasting treatment can be stably and uniformly carried out by controlling the oxidative roasting temperature to 900°C or lower.

In the method according to the present embodiment, it is preferred to set the treatment time of the oxidative roasting treatment so that the carbon grade (the amount of carbon contained) of the oxidatively roasted material obtained will be less than 1.0 mass%. Herein, a test is carried out to obtain a relationship among, in the oxidative roasting treatment, the amount of calcium carbonate charged, the treatment temperature, the amount of oxidant introduced and the amount of carbon contained in the oxidatively roasted material obtained, and a specific treatment time can be set based on the test results. When the treatment time of the oxidative roasting treatment is set to two hours or longer, for example, the carbon grade in the oxidatively roasted material obtained is easily less than 1.0 mass%. Furthermore, when the treatment time is set to shorter than 3 hours, the oxidative roasting treatment for a longer treatment time than required is prevented, and thus treatment efficiency can be further increased.

About the treatment temperature of the oxidative roasting treatment, in a case where the treatment temperature is lower than 600°C, even when an oxidant is introduced in the above-described conditions, carbon is not decomposed and easily remains, and moreover aluminum oxidization remains only the surface thereof, and aluminum is easily diffused into alloy in the subsequent reduction step S4. In addition, phosphorus is generally contained in residual carbon, and thus phosphorus, which is relatively easily reduced, is reduced to a non-negligible extent by carbon when the amount of residual carbon is high. Phosphorus can be distributed to alloy in the subsequent reduction step S4, which is not preferred. Then, phosphorus cannot be effectively removed in this set of steps, and thus it is required to separately remove phosphorus from the alloy in a dephosphorization step after recovering the alloy. In addition, when the temperature conditions of the oxidative roasting treatment are lower than 600°C, oxidation removal of carbon requires a longer time, and thus the treatment time becomes too long, and there is concern about encountering obstacles to operations.

On the other hand, when the treatment temperature of the oxidative roasting treatment is higher than 900°C, the oxidatively roasted material is easily sintered, and there can exist obstacles to handling a treatment in the subsequent reduction step S4. In addition, when e.g. a known rotary kiln is used for the oxidative roasting treatment, roasted material may stick on a refractory in a furnace and be grown, which can cause blockage in the furnace, and thus treatment efficiency is easily lowered in the reduction step S4. Furthermore, in order to maintain the temperature, costs to produce a furnace body and thermal energy costs become extremely high, and an efficient treatment cannot be carried out.

In addition, the oxidative roasting treatment can be carried out using, for example, a known roasting furnace. It is also preferred to provide a furnace (preliminary furnace) different from a melting furnace used in the reduction melting treatment in the reduction step S4, and to carry out the treatment in the preliminary furnace. Every type of kiln, which can roast the pulverized material and simultaneously carry out an oxidation treatment in the interior thereof by supplying oxygen, can be used as the roasting furnace. As an example, a rotary kiln, a tunnel kiln (hearth furnace) and the like which are conventionally known can be suitably used.

### [Reduction step]

In the reduction step S4, the oxidatively roasted material obtained in the oxidative roasting step S3 is reduced to obtain reduced material. An object of the reduction step S4 is to retain unnecessary oxides such as aluminum oxidized by the oxidative roasting treatment as oxides, reduce and melt oxides of valuable metals such as copper, which have been oxidized by the oxidative roasting treatment, and recover reduced material as integrated alloy.

Herein, in the reduction step S4, the reduction melting treatment is carried out at least in the presence of carbon. Molten material containing slag and alloy containing valuable metals is obtained by such reduction melting treatment.

Carbon is a reductant, which easily reduces valuable metals to be recovered such as copper, nickel and cobalt. Examples thereof include graphite, which can reduce 2 mol of valuable metal oxides such as copper oxide and nickel oxide by 1 mol of carbon, and the like. In addition, e.g. hydrocarbons which can reduce 2 to 4 mol per mol of carbon can be used as a carbon resource. As described above, valuable metals are efficiently reduced by the reduction melting treatment in the presence of carbon as a reductant, and thus alloy containing valuable metals can be more effectively obtained. In addition, reduction using carbon also has an advantage of extremely high safety compared to, for example, when utilizing thermite reaction, in which reduction proceeds using metal powder of e.g. aluminum as a reductant.

In addition to artificial graphite and natural graphite, e.g. coal and coke can be also used as carbon, a reductant, as long as the degree of impurities is acceptable in products and subsequent steps. It should be noted that ammonia and carbon monoxide may be added in the reduction melting treatment.

At this time, the carbon abundance is preferably adjusted to a moderate value. In a case where the carbon abundance is too high, when phosphorus is contained in the oxidatively roasted material, much of phosphorus is reduced by the carbon, distributed to alloy containing valuable metals such as copper, nickel and cobalt, and cannot be effectively removed, and thus alloy with a high phosphorus grade is obtained. On the other hand, in a case where the carbon abundance is too low, phosphorus is effectively removed and then alloy with a low phosphorus grade is obtained; however, valuable metals are not effectively reduced, and thus the recovery ratio of valuable metals is lowered. It should be noted that the carbon abundance can be increased and decreased considering e.g. the amount of phosphorus remaining in the oxidatively roasted material, and also differences between the costs of carbon (carbon resource) used as a reductant and the costs of valuable metals to be recovered (cost differences).

Specifically, the reduction melting treatment in the reduction step S4 is carried out in the presence of carbon in an amount of preferably above 7.5 mass% and 10 mass% or less and more preferably 8.0 mass% or more and 9.0 mass% or less with respect to 100 mass% of the oxidatively roasted material to be treated. By controlling the carbon abundance as described above, valuable metals are effectively reduced to improve the recovery ratio, whereas phosphorus reduction can be prevented and also phosphorus can be effectively separated to obtain alloy with a low phosphorus grade.

The carbon abundance can be adjusted by adding e.g. graphite in the reduction melting treatment as described above. Strictly speaking, it is preferred to make adjustment including the amount of carbon, which has not been oxidized and removed by the oxidative roasting treatment in the oxidative roasting step S3. That is, the carbon abundance includes not only the amount of carbon added in the reduction melting treatment, but also the amount of carbon remaining in the oxidatively roasted material. However, because a certain amount of oxidant is introduced and the oxidative roasting treatment is also carried out in specific temperature range conditions in the oxidative roasting step S3 as described above, carbon contained in the raw material is effectively removed, and carbon is hardly contained in the oxidatively roasted material obtained. Because of this, about the amount of carbon in the reduction melting treatment, the amount of carbon added is substantially considered the abundance thereof, which can be freely adjusted by carbon added.

The temperature conditions in the reduction melting treatment (melting temperature) are not particularly limited, and are preferably 1320°C or higher and 1600°C or lower and more preferably 1450°C or higher and 1550°C or lower. For example, the melting point is generally 1380°C or higher for copper alloys containing 50 mass% or more of cobalt, and the melting point is generally 1320°C or higher for copper alloys containing 50 mass% or more of nickel. Therefore, valuable metals such as copper, nickel and cobalt are easily recovered as alloys by reduction-melting at a temperature of 1320°C or higher. In addition, the fluidity of the alloy obtained becomes very good, and the separation efficiency between impurity components and valuable metals is improved by reduction-melting at a temperature of 1450°C or higher, which is more preferred. On the other hand, when the melting temperature is higher than 1600°C, thermal energy is consumed in a wasteful way, and consumption of refractories such as crucibles and furnace walls becomes severe, and thus productivity can be lowered. Therefore, the melting temperature is preferably 1600°C or lower.

In the reduction melting treatment, a flux is preferably used. Slag containing oxides of e.g. aluminum can be dissolved in a flux and removed by reduction-melting using the flux.

A flux containing calcium (Ca) as a main component is preferred. Calcium oxide and calcium carbonate, for example, can be used. Phosphorus is oxidized to form an acid oxide, and thus as the composition of slag becomes basic, phosphorus is easily distributed to the slag and removed. Therefore, it is preferred that the amount of calcium, which forms a basic oxide in slag, be higher and the amount of silicon (Si), which forms an acid oxide, be smaller. In particular, a flux is preferably added for the treatment so that the mass ratio of silicon dioxide (SiO₂)/calcium oxide (CaO) in slag generated will be 0.5 or less. In addition, when the proportion of aluminum oxide (Al₂O₃) is high, the melting point of slag is increased, and thus a sufficient amount of calcium is required to melt aluminum oxide. In particular, a flux is preferably added for the treatment so that the mass ratio of calcium oxide (CaO)/aluminum oxide (Al₂O₃) in slag will be 0.3 or more and 2.0 or less. Because of this, the slag becomes basic and phosphorus which forms an acid oxide can be effectively removed.

In the reduction melting treatment, dust and exhaust gas, for example, can be generated; however, they can be detoxified by a conventionally known treatment for exhaust gas.

In addition, sulfur can be added to alloy obtained after the reduction melting treatment in the reduction step S4 before recovering the alloy, thereby being able to make the alloy fragile and easily crush the alloy. The specific surface area can be increased by crushing the alloy, and thus leaching properties in the hydrometallurgical process can be improved.

It should be noted that a method in which the oxidatively roasted material obtained after the oxidative roasting step S3 is reduced and melted to recover reduced material as integrated alloy has been described above; however, it is not essential to carry out reduction and melting at the same time and the steps can be also carried out independently.

Specifically, first, the oxidatively roasted material obtained by the oxidative roasting step S3 is reduced as a reduction step to obtain reduced material. In this reduction step, unnecessary oxides such as aluminum oxidized in the oxidative roasting treatment are retained as oxides, oxides of valuable metals such as copper, which have been oxidized by the oxidative roasting treatment, are reduced, and reduced material is recovered as integrated alloy in the subsequent melting step.

In the reduction step, the oxidatively roasted material is heated and reduced at a temperature of, for example, 500°C or higher and 1000°C or lower (reduction temperature) and also in the presence of carbon. The reduction temperature is not particularly limited; however, when the temperature is 500°C or higher and 1000°C or lower, the time for reduction can be shortened, and also thermal energy costs can be kept low, and thus the reduction treatment efficiency can be increased. It should be noted that when the reduction temperature is lower than 500°C, the reduction reaction efficiency is lowered, and thus the treatment requires a longer time. On the other hand, when the reduction temperature is higher than 1000°C, sintering easily occurs before reducing the oxidatively roasted material.

The reduction treatment can be carried out using a reduction furnace, and the interior of the reduction furnace is heated to a desired temperature using e.g. a burner to heat and reduce the oxidatively roasted material charged into the furnace.

Next, the reduced material obtained after the reduction step is melted and alloyed in the melting step. As described above, the reduced material is melted to obtain molten material containing slag containing oxides of e.g. aluminum, and alloy containing valuable metals such as copper, nickel and cobalt.

In the melting step, the temperature conditions in the melting treatment (melting temperature) are not particularly limited, and are preferably 1320°C or higher and 1600°C or lower. In addition, a flux such as calcium oxide or calcium carbonate is preferably used in the melting treatment. It should be noted that dust and exhaust gas, for example, can be generated in the melting treatment; however, they can be detoxified by a conventionally known treatment for exhaust gas.

### EXAMPLES

The present invention will now be described in more detail using Examples and Comparative Examples thereof. It should be noted, however, that the present invention is not limited to the following examples in any way.

In order to recover alloy containing valuable metals from a raw material containing waste lithium-ion batteries, conditions of a treatment to remove carbon (C) contained in the raw material by oxidative roasting of the raw material (oxidative roasting treatment) were investigated.

### (Waste battery pretreatment step)

First, used batteries of 18650 cylindrical batteries and on-board square batteries, and defective products recovered in the battery production process were prepared as waste lithium-ion batteries to be treated. The waste lithium-ion batteries were soaked in saltwater for electric discharges, and water was then drained. They were roasted at a temperature of 260°C in the atmosphere, and electrolyte solutions and outer cases were dismantled and removed to obtain battery contents.

### (Pulverizing step)

Next, using a grinder (product name: Good Cutter: manufactured by UJIIE MANUFACTURING CO., LTD.) the battery contents were pulverized. The carbon grade in the pulverized material (pulverized material of the waste batteries) was 26 mass%.

### (Oxidative roasting step)

Next, the obtained pulverized material was subjected to the oxidative roasting treatment in conditions shown in Table 1 below (the carbon grade in raw material, the amount of calcium carbonate charged based on the mass ratio of calcium oxide (CaO)/aluminum oxide (Al₂O₃) and roasting treatment temperature). The oxidative roasting treatment was carried out by operating a rotary kiln in the atmosphere. In addition, air was introduced as an oxidant.

Table 1 below shows the conditions of the oxidative roasting treatment and the results obtained by measuring the treatment temperature of the oxidative roasting treatment (oxidative roasting temperature).

**[Table 1]**

| | Treated raw material (g) | Carbon grade in raw material (mass%) | Amount of charged calcium carbonate (CaO/Al₂O₃ ratio) | Oxidative roasting temperature (° C) |
|---|---|---|---|---|
| Reference Example 1 | 100 | 26 | - | 875 |
| Example 1 | 100 | 26 | 0.1 | 848 |
| Example 2 | 100 | 26 | 0.3 | 825 |
| Example 3 | 100 | 39 | 1.2 | 815 |
| Comparative Example 1 | 100 | 39 | - | 1000 |
| Comparative Example 2 | 80 | 39 | - | 880 |

As can be seen from the results in Table 1, raw materials with the same carbon grade were used in Examples 1 and 2 and Reference Example 1; however, the oxidative roasting temperatures in Examples 1 and 2 were lower than the oxidative roasting temperature in Reference Example 1 into which calcium carbonate had not been charged. It was further found that about the amount of calcium carbonate charged, as the mass ratio of calcium oxide (CaO)/aluminum oxide (Al₂O₃) was increased, the oxidative roasting temperature was decreased. The results could confirm that charged calcium carbonate contributed to keeping down the oxidative roasting temperature.

Example 3 used a raw material with a higher carbon grade (39 mass%) than of the raw materials used in Reference Example 1 and Examples 1 and 2, and it was found that even when the carbon grade in waste lithium-ion batteries was significantly high as described above, the oxidative roasting temperature could be kept low by charging calcium carbonate and setting the amount charged to an amount in which the mass ratio of calcium oxide (CaO)/aluminum oxide (Al₂O₃) was 1.0 or more.

Such results could confirm that the oxidative roasting temperature could be kept down to 900°C or lower by charging calcium carbonate and preferably setting the amount charged so that the mass ratio of calcium oxide (CaO)/aluminum oxide (Al₂O₃) was 1.0 or more even when the carbon grade in waste lithium-ion batteries was high.

On the other hand, Comparative Example 1 is an example using a raw material with a high carbon grade as with Example 3. Calcium carbonate was not charged thereinto, and thus the oxidative roasting temperature was increased beyond 900°C and to 1000°C.

Comparative Example 2 is a case in which the amount of charged waste lithium-ion batteries (the amount of treatment) was 80% of the treatment amount in Comparative Example 1, and the oxidative roasting temperature could be controlled to 900°C or less but was higher by 65°C than the oxidative roasting temperature in Example 3. It was found that in order to keep the oxidative roasting temperature to the same level as in Example 3, the amount of waste lithium-ion batteries treated was required to be further decreased. That is, the method in Comparative Example 2 was confirmed to be an inefficient method.

## Claims

1. A method for recovering valuable metals from waste lithium-ion batteries, the method comprising,
an oxidative roasting step of carrying out an oxidative roasting treatment on a raw material containing the waste lithium-ion batteries, and
a reduction step of reducing oxidatively roasted material obtained in presence of carbon,
a treatment temperature of the oxidative roasting treatment being controlled by charging calcium carbonate into a furnace together with the raw material containing the waste lithium-ion batteries in the oxidative roasting step.

2. The method for recovering valuable metals according to claim 1, wherein an amount of the charged calcium carbonate in terms of calcium oxide with respect to an amount of aluminum contained in the raw material, in terms of an amount of aluminum oxide, is adjusted so that a mass ratio expressed by calcium oxide (CaO)/aluminum oxide (Al₂O₃) is 1.0 or more and 2.0 or less in the oxidative roasting step.

3. The method for recovering valuable metals according to claim 1 or 2,
wherein a carbon grade of the oxidatively roasted material obtained is less than 1.0 mass% by introducing an oxidant in an amount of 1.5 times or more chemical equivalent of carbon in the raw material to be treated, and carrying out the oxidative roasting treatment at a treatment temperature selected in a range of 600°C or higher and 900°C or lower in the oxidative roasting step.
